# EUROPÄISCHE PATENTSCHRIFT

(11) **EP 2 906 919 B1**
(45) Veröffentlichungstag und Bekanntmachung des Hinweises auf die Patenterteilung: **12.12.2018**
(21) Anmeldenummer: 13773616.1
(22) Anmeldetag: 02.10.2013
(51) Int. Cl.: G01K 1/14, G01K 11/32, F28F 27/00, F28D 9/00, F28F 3/02

(54) **TEMPERATURMESSUNG MITTELS EINES LICHTWELLENLEITERS IN EINEM PLATTENWÄRMETAUSCHER**
TEMPERATURE MEASUREMENT USING AN OPTICAL WAVEGUIDE IN A PLATE HEAT EXCHANGER
MESURE DE TEMPÉRATURE AU MOYEN D'UN GUIDE D'ONDES LUMINEUSES DANS UN ÉCHANGEUR DE CHALEUR À PLAQUES

(30) Priorität: 09.10.2012 EP 12006984
(43) Veröffentlichungstag der Anmeldung: 19.08.2015
(73) Patentinhaber: Linde Aktiengesellschaft, 80331 München (DE)
(72) Erfinder: FLÜGGEN, Rainer, 83673 Bichl (DE); SCHAEL, Arndt-Erik, 69181 Leimen (DE)
(74) Vertreter: Meilinger, Claudia Sabine
(86) Internationale Anmeldenummer: PCT/EP2013/002975
(87) Internationale Veröffentlichungsnummer: WO 2014/056587

(56) Entgegenhaltungen:
- DE-A1-102007 021 564
- DE-A1-102008 060 507
- DE-A1-102009 049 479

## Beschreibung

Die Erfindung betrifft einen Plattenwärmetauscher gemäß dem Oberbegriff des Anspruchs 1 sowie ein Verfahren zum Bestimmen der Temperatur eines Plattenwärmetauschers.

Üblicherweise weist ein derartiger Plattenwärmetauscher eine Mehrzahl an parallel zueinander angeordneten Platten auf, wobei zwischen zwei benachbarten Platten je eine Lamelle (sogenannter Fin) angeordnet ist, so dass eine Vielzahl von parallelen Kanälen zwischen benachbarten Platten gebildet werden, die von einem Medium durchfließbar sind. Zu den Seiten hin werden die Fins durch sogenannte Sidebars (Randleisten) begrenzt, die mit den angrenzenden Platten verlötet sind. Auf diese Weise wird eine Mehrzahl an parallelen Wärmeaustauschpassagen des Plattenwärmetauschers gebildet, so dass z.B. in den Wärmeaustauschpassagen Medien im Gegenstrom aneinander vorbeigeführt werden können um einen indirekten Wärmeaustausch zu vollziehen.

In Plattenwärmetauschern werden bislang zur Temperaturmessung z.B. Fühler außen auf den Plattenwärmetauschern aufgebracht. Aufgrund der guten Wärmeleitung sind derartige Messungen jedoch ungenau und geben nur ein mittleres Temperaturniveau an. Die Temperaturen im Inneren des Plattenwärmetauschers bleiben somit unbekannt. Weiterhin können gemäß DE10 2007 021 564 A1 Temperaturen in Plattenwärmetauschern prinzipiell mit Lichtwellenleitern gemessen werden.

In der DE 10 2008 060 507 A1 wird ein Verfahren zur Messung der Temperatur in einer Kokille mit Hilfe eines faseroptischen Messverfahrens beschrieben. Dazu sind Lichtwellenleiter auf der Außenseite einer Kokille vorgesehen, durch die Laserlicht geleitet wird. Auf der Außenseite der Kokillen-Kupferplatte werden Nuten geformt, in denen die mindestens eine Lichtwellenleitfaser angeordnet wird.

Die DE 10 2009 049 479 A1 bezieht sich auf die Einbindung eines Lichtwellenleiters eines Messsensors in ein Bauteil. Hierzu wird vorgeschlagen, den Lichtwellenleiter an den Grundwerkstoff des Bauteils mittels einer Beschichtung anzubinden.

Hiervon ausgehend liegt daher der vorliegenden Erfindung das Problem zu Grunde, einen Plattenwärmetauscher sowie ein Verfahren zur Bestimmung der Temperatur eines Plattenwärmetauschers bereit zu stellen, der bzw. das eine genaue Bestimmung der Temperatur des Plattenwärmetauschers ermöglicht.

Dieses Problem wird durch einen Plattenwärmetauscher mit den Merkmalen des Anspruchs 1 gelöst.

Danach ist vorgesehen, dass der Lichtwellenleiter in einer Nut einer Lamelle des Plattenwärmetauschers angeordnet ist. Die besagte Nut ist dabei bevorzugt in die Lamelle eingebracht, beispielsweise durch Fräsen.

Weiterhin kann der Plattenwärmetauscher eine Mehrzahl der vorstehend beschriebenen Lichtwellenleiter aufweisen, wobei die einzelnen Lichtwellenleiter jeweils in einer Nut einer zugeordneten Lamelle bzw. einer Platte des Plattenwärmetauschers angeordnet sind. Auf diese Weise kann eine dreidimensionale Temperaturverteilung im Plattenwärmetauscher gemessen werden.

Bevorzugt liegt der besagte Lichtwellenleiter in Form eines längserstreckten Elementes vor, das insbesondere durch eine Glasfaser gebildet ist bzw. solche aufweist. Es sind jedoch auch optische Fasern bzw. Lichtwellenleiter aus anderen Materialen denkbar.

Gemäß einer bevorzugten Ausführungsform der Erfindung ist vorgesehen, dass der Lichtwellenleiter in einem den Lichtwellenleiter umgebenden Mantel angeordnet ist. Vorzugsweise ist jener Mantel rohrförmig ausgebildet, so dass er den Lichtwellenleiter im Querschnitt vollständig umschließt. Bevorzugt ist der besagte Mantel aus einem Metall wie etwa einem Stahl oder Aluminium ausgebildet.

Gemäß einer Ausführungsform der Erfindung ist der Lichtwellenleiter so bezüglich der Lamelle oder jener Platte angeordnet, dass er einen meanderförmigen Verlauf aufweist. D.h., der Lichtwellenleiter weist mehrere einstückig miteinander verbundene bzw. einstückig aneinander angeformte Abschnitte auf, wobei vorzugsweise je zwei benachbarte Abschnitte über einen insbesondere U-förmig gekrümmten Abschnitt ineinander übergehen. Vorzugsweise weisen jene gekrümmten Abschnitte einen Krümmungsradius im Bereich von 1cm bis 5cm, bevorzugt 3cm, auf. Die besagten (längs erstreckten) Abschnitte sind vorzugsweise parallel zueinander angeordnet, so dass sich auf Grund der gekrümmten Abschnitte insgesamt der besagte meanderförmige Verlauf des Lichtwellenleiters ergibt.

Für den Fall, dass es sich um einen Lichtwellenleiter handelt, der in einer Nut einer Lamelle des Plattenwärmetauschers angeordnet ist, verlaufen die besagten (geraden) Abschnitte des Lichtwellenleiters jeweils von einem ersten äußeren Randbereich der Lamelle zu einem gegenüberliegenden, dazu parallelen zweiten äußeren Randbereich der besagten Lamelle, und zwar vorzugsweise quer zu den durch die Lamelle gebildeten Kanälen. Der Lichtwellenleiter erstreckt sich dabei bevorzugt ausgehend vom warmen Ende des Plattenwärmetauschers zum kalten Ende des Plattenwärmetauschers.

Alternativ hierzu, für den Fall, dass es sich um einen Lichtwellenleiter handelt, der in einer Nut einer Platte des Plattenwärmetauschers angeordnet ist, ist bevorzugt vorgesehen, dass sich die besagten (geraden) Abschnitte (analog zum vorgenannten Fall) jeweils zwischen einem ersten äußeren Randbereich der betreffenden Platte und einem gegenüberliegenden, dazu parallelen zweiten äußeren Randbereich der Platte erstrecken.

Des Weiteren kann der Plattenwärmetauscher pro Lamelle bzw. Platte grundsätzlich auch einen weiteren Lichtwellenleiter aufweisen, der ebenfalls mäanderförmig verlegt sein kann, beispielsweise quer zu dem anderen Lichtwellenleiter.

Bereits bei Vorliegen eines Lichtwellenleiters pro Lamelle bzw. Platte lässt sich aufgrund des meanderförmigen Verlaufes des Lichtwellenleiters eine 2D Verteilung der Temperatur des Plattenwärmetauschers angeben, da ein solcher Lichtwellenleiter entlang seiner Erstreckungsrichtung mehrere Messpunkte für die zu messende Temperatur besitzt.

Gemäß einer Ausführungsform der Erfindung handelt es sich bei der besagten Lamelle in der der Lichtwellenleiter angeordnet ist bzw. bei einer entsprechenden Platte mit Nut, in der der Lichtwellenleiter angeordnet ist, vorzugsweise um eine äußereste Lamelle des Plattenwärmetauschers bzw. um eine äußerste Platte des Plattenwärmetauschers (Deckplatte).

Die besagte Lamelle bzw. Platte, in die der Lichtwellenleiter eingebaut ist, ist vorzugsweise ein Teil einer sogenannten Dummy-Lage des Plattenwärmetauschers, die zur Umgebung hin offen ist. D.h., es handelt sich um eine Lage bzw. Wärmeaustauschpassage des Plattenwärmetauschers, die bei einem bestimmungsgemäßen Betrieb des Plattenwärmetauschers nicht von Prozessmedium durchströmt wird.

Alternativ hierzu kann jedoch die Lamelle bzw. die besagte Platte auch für den Wärmeaustauschprozess genutzt werden. Hierzu wird der Lichtwellenleiter mit seinem umgebenden Mantel vorzugsweise mit der Lamelle bzw. Platte dicht verlötet, so dass die entsprechende Wärmeaustauschpassage keine Undichtigkeit zur Umgebung hin aufweist.

Der oder die Lichtwellenleiter des erfindungsgemäßen Plattenwärmetauschers sind vorzugsweise mit einer Messeinrichtung verbunden, die dazu eingerichtet ist, mittels des besagten Lichtwellenleiters die Temperatur im Plattenwärmetauscher zu messen.

Die besagte Messeinrichtung ist hierzu bevorzugt dazu ausgebildet, in den mindestens einen Lichtwellenleiter Licht (optische Signale) einzuleiten und in dem Lichtwellenleiter zurückgestreutes Licht in bekannter Weise auszuwerten. Hierbei wird ausgenützt, dass die in den Lichtwellenleiter eingesandten und zurückgestreuten optischen Signale stark temperaturabhängig und daher zur Temperaturabmessung in der Umgebung des Lichtwellenleiters geeignet sind. Zur Auswertung solcher optischen Signale des Lichtwellenleiters existieren mehrere Verfahrensweisen, die es erlauben, die Temperatur an einem beliebigen Punkt des Lichtwellenleiters mit ausreichend hoher Präzision zu bestimmen.

In einer bevorzugten Ausführungsform der Erfindung ist die Messeinrichtung dazu eingerichtet und vorgesehen, durch den mindestens einen Lichtwellenleiter zurückgestreutes Licht auszuwerten, das durch Ramanstreuung des in den Lichtwellenleiter eingeleiteten Lichtes entsteht. Hierbei wird ausgenutzt, dass Lichtwellenleiter in der Regel aus dotiertem Quarzglas (amorphe Festkörperstruktur, bestehend hauptsächlich aus Siliziumdioxid) gefertigt sind. In derartigen amorphen Festkörperstrukturen werden über thermische Effekte Gitterschwingungen induziert. Solche Gitterschwingungen sind temperaturabhängig. Licht, welches auf die Moleküle bzw. Partikel im Lichtwellenleiter trifft, tritt daher in Wechselwirkung mit den Elektronen der Moleküle. Diese Wechselwirkung wird auch als Ramanstreuung bezeichnet. Das zurückgestreute Licht lässt sich in drei spektrale Gruppen einteilen. Neben der Rayleigh-Streuung, welche der Wellenlänge des eingestrahlten Lichts entspricht, existieren die sog. Stokes- und die sog. Anti-Stokes-Komponenten. Im Gegensatz zu den zu höheren Wellenlängen verschobenen und nur gering temperaturabhängigen Stokes-Komponenten sind die zu kleineren Wellenlängen verschobenen Anti-Stokes-Komponenten deutlich temperaturabhängig. Die Messeinrichtung ist daher vorzugsweise dazu ausgebildet, das Intensitätsverhältnis zwischen Stokes- und Anti-Stokes-Komponenten zu berechnen, wobei die Messeinrichtung vorzugsweise dazu ausgebildet ist, hierzu eine Fourier-Transformation dieser beiden rückgestreuten Komponenten zu berechnen und mit einer Fourier-Transformation eines Referenzsignals zu vergleichen. Hieraus erhält man die Intensitäten der beiden Komponenten über der Länge des Lichtwellenleiters. Somit kann über den Vergleich der beiden Intensitäten die Temperatur für jeden Punkt des Lichtwellenleiters ermittelt werden.

Gemäß einer weiteren Variante ist vorgesehen, dass die Temperaturbestimmung durch Auswertung der Rayleigh-Streuung erfolgt. Hierzu weist die Messeinrichtung bevorzugt ein kohärentes Frequenzbereichsreflektometer (c-OFDR für coherent Optical Frequency Domain Reflectometer) auf, bei dem Licht eines durchstimmbaren Lasers in ein Mach-Zehnder-Interferometer eingekoppelt wird, das das Licht auf zwei Strecken aufteilt, wobei der Lichtwellenleiter die eine Strecke bildet und die andere Strecke eine Referenzstrecke bekannter Länge ist. Das Rayleigh-Streulicht aus dem Lichtwellenleiter wird mit dem Lichtanteil aus der Referenzstrecke überlagert und detektiert. Beim Durchstimmen der Laserwellenlänge entsteht dabei am Detektor ein periodisches Signal, dessen Frequenz vom jeweiligen Streuort des Lichtwellenleiters abhängt. Die einzelnen Frequenzen dieses Signals, die über eine Fourier-Transformation erhältlich sind, entsprechen somit den Streuorten in dem Lichtwellenleiter; die Amplitude jedes Frequenzanteils gibt die Intensität der jeweiligen Reflexion an. Hierbei lassen sich Auflösungen kleiner gleich 0,1 mm erzielen.

Die Rayleigh-Strahlung in einem Lichtwellenleiter, wie z.B. einer Glasfaser, entsteht durch elastische Streuprozesse an lokalen Defekten/Störungen des Lichtwellenleiters. Wird ein solche Glasfaser mittels c-OFDR abgetastet, ergibt sich ein für die Glasfaser charakteristischer, fluktuierender Intensitätsverlauf der Rayleigh-Streuung entlang der Glasfaser, der bei einer Temperaturänderung (Änderung der räumlichen Ausdehnung der Faser) räumlich gestreckt bzw. gestaucht wird, wodurch die Temperatur entlang der Glasfaser berechnet werden kann. Die Messeinrichtung ist entsprechend bevorzugt dazu konfiguriert das Signal entlang der Glasfaser in benachbarte Segmente (größer gleich 1mm) zu zerlegen und das entsprechende Signal in den Frequenzraum zu transformieren. Für jedes Segment ergibt sich dabei ein fluktuierendes Reflexionsmuster in Abhängigkeit von der Frequenz. Änderungen der Temperatur bzw. Dehnung der Glasfaser bedingen eine Frequenzverschiebung die insbesondere proportional zur Temperaturänderung der Glasfaser im jeweiligen Segment ist. Die Messeinrichtung ist entsprechend bevorzugt dazu ausgebildet anhand der jeweiligen Frequenzverschiebung die (lokale) Temperatur der Glasfaser bzw. des Lichtwellenleiters zu ermitteln.

In einer weiteren Ausführungsform der Erfindung erfolgt die Temperaturmessung über die Auswertung von optischen Signalen, wie sie durch Brillouin-Streuung des Lichtwellenleiters entstehen. In diesem Fall basiert die Temperaturmessung auf der ortsaufgelösten Bestimmung der Referenzfrequenz zwischen der in den Lichtwellenleiter eingeleiteten, primären Lichtwelle und der durch die in Folge von Brillouin-Streuung im Lichtwellenleiter induzierten und zurückgestreuten Welle, welche in ihrer Frequenz in Abhängigkeit von der Temperatur gegenüber der Primärwelle verringert ist. Die Messeinrichtung ist daher vorzugsweise dazu ausgebildet, eine pulsförmige Primärlichtwelle in den Lichtwellenleiter einzuleiten und das rückgestreute Licht zeitaufgelöst für verschiedene Frequenzdifferenzen zu detektieren und unter Kenntnis der Pulslaufzeit die Frequenzverschiebung auf Grund der Temperaturveränderung ortsaufgelöst zu bestimmen. Auch in dieser Ausgestaltung der Erfindung lässt sich also durch die Auswertung der (rückgestreuten) optischen Signale die Temperatur an jedem beliebigen Punkt des Lichtwellenleiters bestimmen.

In einer weiteren Ausführungsform der Erfindung ist vorgesehen, die Temperaturmessung über die Auswertung von optischen Signalen, wie sie durch Streuung am Bragg-Gitter entstehen. Bragg-Gitter sind in den Lichtwellenleiter eingeschriebene optische Bandfilter, welche nahezu beliebig oft im Lichtwellenleiter platziert werden können. Die Mittenwellenzahl des Bandstopps ergibt sich dabei aus der Bragg-Bedingung. Die spektrale Breite des Bandstopps hängt neben der Gitterlänge und der Brechzahl von der Temperatur ab. Die Messeinrichtung ist dann entsprechend dazu ausgebildet bei gegebener und über den Lichtwellenleiter verschiedener Gitterlänge und Brechzahl die Temperatur an der jeweiligen Stelle des Bragg-Gitters über die Breite des Bandstopps zu bestimmen.

Weiterhin wird das erfindungsgemäße Problem durch ein Verfahren zur Temperaturmessung in einen Plattenwärmetauscher, insbesondere unter Verwendung eines Plattenwärmetauschers nach einem der vorangegangenen Ausführungsbeispiele, gelöst, wobei das Verfahren gemäß Anspruch 12 die Schritte aufweist: Einkoppeln von Licht in einen Lichtwellenleiter, der in einer Nut in einer Lamelle oder in einer Nut einer Platte des Plattenwärmetauschers angeordnet ist, so dass Licht im Lichtwellenleiter zurückgestreut wird, wobei der Lichtwellenleiter insbesondere einen meanderförmigen Verlauf aufweist, und Messen der Temperatur des Lichtwellenleiters mit Hilfe des zurückgestreuten Lichtes (siehe oben).

Weitere Einzelheiten und Vorteile der Erfindung sollen durch die nachfolgenden Figurenbeschreibungen von Ausführungsbeispielen an Hand der Figuren erläutert werden.

Es zeigen:
- Fig. 1: eine ausschnitthafte, schematische Schnittansicht eines Plattenwärmetauschers, die zwei Platten des Plattenwärmetauschers zeigt, die zusammen mit einer zwischen den Platten angeordneten Lamelle eine Wärmeaustauschpassage des Plattenwärmetauschers bilden;
- Fig. 2: eine schematische Draufsicht auf eine Lamelle bzw. Platte eines erfindungsgemäßen Plattenwärmetauschers mit darin angeordneten Lichtwellenleiter; und
- Fig. 3: eine Seitenansicht einer Lamelle bzw. Platte des Plattenwärmetauschers mit Nut zur Aufnahme eines Lichtwellenleiters.

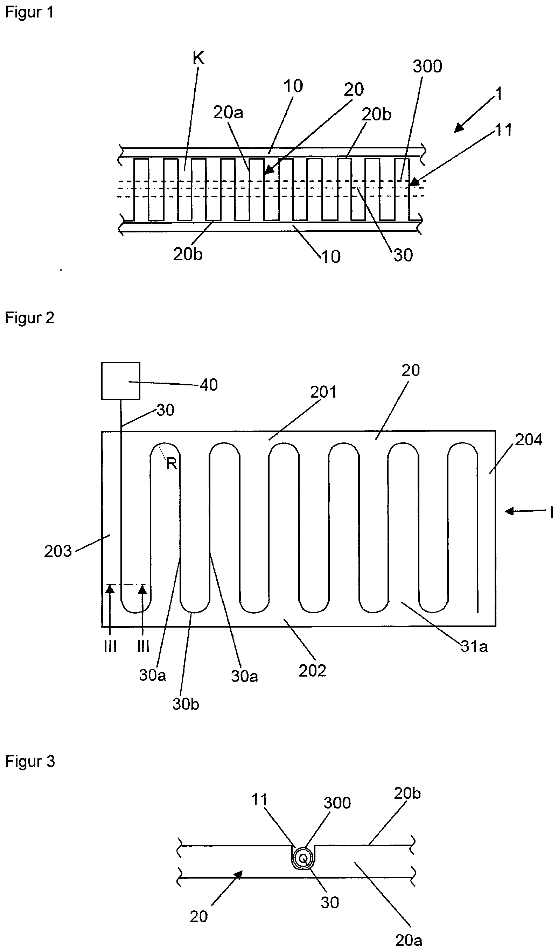

Fig. 1 zeigt eine Schnittansicht eines Plattenwärmetauschers 1. Ein derartiger Plattenwärmetauscher 1 weist eine Mehrzahl an parallel zueinander angeordneten Platten 10 auf, wobei jeweils zwischen zwei benachbarten Platten 10 des Wärmetauschers 1 eine sog. Lamelle (Fin) 20 angeordnet ist, die einen gewellten bzw. stufenförmigen Verlauf aufweist, so dass eine Mehrzahl an parallelen Kanälen K gebildet wird, in denen jeweils ein Prozessmedium strömen kann, das dann in indirektem Wärmeaustausch mit einem in einer parallelen Lamelle 20 geführten Prozessmedium treten kann. Im Einzelnen wird die gewellte/gefaltete Form einer Lamelle 20 durch parallel zueinander angeordnete Schenkel 20a gebildet, die sich insbesondere senkrecht zu den Platten 10 erstrecken, sowie durch parallel zu den Platten 10 verlaufende zweite Schenkel 20b, die jeweils zwei einander gegenüberliegende erste Schenkel 20a abwechselnd oben und unten miteinander verbinden. Der jeweilige Übergang zwischen den Schenkeln 20a, 20b kann auch verrundet sein, so dass die jeweilige Lamelle 20 ein wellenartiges Profil aufweist. Die Lamellen 20 mit den umgebenden Platten 10 werden auch Wärmeaustauschpassagen oder Lagen des Plattenwärmetauschers 1 genannt.

Zum Anordnen eines Lichtwellenleiters 30 in einer Lage des Plattenwärmetauschers 1 kann nun entweder in die besagten ersten und zweiten Schenkel 20a, 20b einer Lamelle 20 eine Nut 11 eingebracht werden (z.B. durch Fräsen), die so ausgebildet wird, dass der darin angeordnete Lichtwellenleiter 30 einen im Wesentlichen meanderförmigen Verlauf aufweist. D.h., der besagte Lichtwellenleiter 30 weist, wie in der Fig. 2 in einer Draufsicht gezeigt, eine Mehrzahl an parallelen Abschnitten 30a auf, die jeweils von einem ersten Randbereich 201 der Lamelle 20 zu einem gegenüberliegenden zweiten Randbereich 202 der Lamelle 20 verlaufen, wobei je zwei benachbarte Abschnitte 30a über einen U-förmig gekrümmten Abschnitt 30b des Lichtwellenleiters 30 einstückig aneinander angeformt sind.

Fig. 3 zeigt die besagte Nut 11 im Querschnitt, d.h. als Ausnehmung der einander gegenüberliegenden ersten Schenkel 20a sowie der diese verbindenden (oberen) zweiten Schenkel 20b.

Vorzugsweise handelt es sich bei den Lagen (Wärmeaustauschpassagen), in denen Lichtwellenleiter 30 angeordnet sind, um sog. Dummy-Lagen des

Plattenwärmetauschers 1, die bei einem bestimmungsgemäßen Betrieb des Wärmetauschers 1 nicht durchströmt werden. Diese Dummy-Lagen befinden sich jeweils bevorzugt an einander gegenüberliegenden Außenseiten des Plattenwärmetauschers 1, die durch Deckplatten 10 des Plattenwärmetauschers 1 gebildet werden. Die Dummy-Lagen sind also nicht am jeweiligen Prozess beteiligt und insbesondere zur Umgebung hin offen. Derartige Dummy-Lagen können jedoch auch zwischen zwei Wärmeaustauschpassagen angeordnet sein und müssen nicht notwendigerweise als äußerste Lage vorgesehen werden.

Alternativ zu den Dummy-Lagen können die besagten Lichtwellenleiter 30 auch in Lagen bzw. Wärmeaustauschpassagen des Plattenwärmetauschers 1 angeordnet werden, die am jeweiligen Wärmeaustauschprozess beteiligt sind.

Der Lichtwellenleiter 30 ist bevorzugt in einem entsprechend gekrümmten Mantel (z.B. Edelstahlhülse) 300 angeordnet, die den Lichtwellenleiter 30 umgibt und vorzugsweise einen Außendurchmesser von 3,2 mm aufweist. Diese Mäntel 300 werden in die gefrästen Lagen (Nuten 11) gelegt und mit den jeweiligen Lamellen 20 verlötet. Sofern eine mit einem Lichtwellenleiter 30 versehene Lage/Wärmeaustauschpassage auch prozesstechnisch genutzt werden soll, werden die Mäntel 300 vorzugsweise aus Aluminium gefertigt und am jeweiligen Austritt aus dem Plattenwärmetauscher 1, d.h. an der jeweiligen Randleiste (Sidebar) des Plattenwärmetauschers dicht mit den Platten bzw. Randleisten verschweißt oder verlötet. In einem solchen Fall weist die jeweilige Lamelle (Fin) normal zu ihrer Erstreckungsebene eine ausreichende Tiefe auf, z.B. 9,5 mm.

Alternativ zur Anordnung des Lichtwellenleiters 30 in einer Lamelle 20, kann der Lichtwellenleiter 30 auch in eine Platte 10 bzw. eine Deckplatte 10 eingebettet werden. In diesem Fall wird die besagte Nut 11 in die jeweilige Platte 10 eingebracht, wobei in einem solchen Fall die jeweilige Platte bzw. Deckplatte 10 eine Stärke von insbesondere etwa 5 mm aufweist. Die mit einem Lichtwellenleiter 30 ausgestatteten Platten 10 werden dann in der üblichen Weise mit den weiteren Komponenten des Plattenwärmetauschers 1 (Lamellen, Randleisten) verlötet.

Bei der vorgenannten schleifen- bzw. meanderförmigen Anordnung des Lichtwellenleiters 30 - die gekrümmten Abschnitte 30b haben vorzugsweise einen Biegeradius von 3 cm - bekommt man (bei Auswertung der Raman-Streuung) zumindest in etwa mindestens alle 500 mm entlang des Lichtwellenleiters 30 einen Messpunkt zur Messung der Temperatur. Das bedeutet, dass man in einer Lage von 750 mm Breite und 5000 mm Länge in etwa über 100 Messpunkte zur Temperaturmessung zur Verfügung hat. Somit kann die Temperaturverteilung entlang der jeweiligen Lamelle zweidimensional angegeben werden. Die Auflösung kann bei Auswertung der Raleigh-Streuung (siehe oben) erheblich gesteigert werden.

Sofern mehrere Lichtwellenleiter in unterschiedlichen Wärmeaustauschpassagen bzw. -lagen des Plattenwärmetauschers 1 übereinander angeordnet werden, besteht des Weiteren die Möglichkeit, die Temperaturverteilung im Plattenwärmetauscher 1 räumlich (dreidimensional) anzugeben.

Zur Messung der Temperatur mittels des jeweiligen Lichtwellenleiters 30 werden die vorhandenen Lichtwellenleiter 30 aus dem Plattenwärmetauscher 1 herausgeführt, vorzugsweise zu einem einzigen Lichtwellenleiter (Glasfaser) verspleist und mit einer entsprechenden Messeinrichtung 40 gekoppelt. Diese ist dazu ausgebildet, in den jeweiligen Lichtwellenleiter 30 Licht einzukoppeln und das zurückgestreute Licht zur Temperaturbestimmung in der bekannten Art auszuwerten (siehe oben).

**Bezugszeichenliste**

| | |
|---|---|
| 1 | Plattenwärmetauscher |
| 10 | Platte |
| 11 | Nut |
| 20 | Lamelle (Fin) |
| 20a, 20b | Schenkel |
| 30 | Lichtwellenleiter (Glasfaser) |
| 30a | Abschnitte |
| 30b | Gekrümmte Abschnitte |
| 40 | Messeinrichtung |
| 201, 202, 203, 204 | Randbereiche der Lamelle bzw. Platte |
| 300 | Mantel |
| K | Kanäle |

## Patentansprüche

1. Plattenwärmetauscher, mit:
- einer Mehrzahl an parallel zueinander verlaufenden Platten (10), so dass eine Vielzahl von parallelen Kanälen (K) gebildet werden, und
- einem Lichtwellenleiter (30) zum Messen der Temperatur des Plattenwärmetauschers (1),
**dadurch gekennzeichnet,**
**dass** zwischen zwei benachbarten Platten (10) je eine Lamelle (20) angeordnet ist und dass der Lichtwellenleiter (30) in einer Nut (11) einer Lamelle (20) angeordnet ist.

2. Plattenwärmetauscher nach einem der vorhergehenden Ansprüche, **dadurch gekennzeichnet, dass** der Lichtwellenleiter (30) längserstreckt ausgebildet ist, wobei der Lichtwellenleiter (30) insbesondere durch zumindest eine Glasfaser gebildet ist.

3. Plattenwärmetauscher nach Anspruch 1 oder 2, **dadurch gekennzeichnet, dass** der Lichtwellenleiter (30) in einem den Lichtwellenleiter (30) umschließenden Mantel (300) angeordnet ist, wobei insbesondere jener Mantel (300) rohrförmig ausgebildet ist, wobei insbesondere der Mantel (300) aus einem Metall, insbesondere aus einem Stahl oder Aluminium gebildet ist.

4. Plattenwärmetauscher nach einem der vorhergehenden Ansprüche, **dadurch gekennzeichnet, dass** der Lichtwellenleiter (30) einen mäanderförmigen Verlauf aufweist.

5. Plattenwärmetauscher nach einem der vorhergehenden Ansprüchen, **dadurch gekennzeichnet, dass** der Lichtwellenleiter (30) eine Mehrzahl an insbesondere parallel zueinander verlaufenden Abschnitte (30a) aufweist, wobei insbesondere je zwei benachbarte Abschnitte (30a) über je einen gekrümmten Abschnitt (30b) des Lichtwellenleiters (30) miteinander einstückig verbunden sind, wobei insbesondere der jeweilige gekrümmte Abschnitt (30b) einen Krümmungsradius (R) im Bereich von 1cm bis 5cm, insbesondere 3cm aufweist.

6. Plattenwärmetauscher nach Anspruch 5, **dadurch gekennzeichnet, dass** sich bei dem in der Nut (11) der besagten Lamelle (20) angeordneten Lichtwellenleiter (30) die besagten Abschnitte (30a) jeweils von einem ersten äußeren Randbereich (201) der Lamelle (20) zu einem gegenüberliegenden zweiten äußeren Randbereich (202) der besagten Lamelle (20) erstrecken.

7. Plattenwärmetauscher nach einem der vorhergehenden Ansprüche, **dadurch gekennzeichnet, dass** der Plattenwärmetauscher (1) eine Mehrzahl an Lichtwellenleitern (30), insbesondere in Form von Glasfasern, aufweist, die jeweils in einer Nut (11) einer zugeordneten Lamelle (20) oder einer Nut (11) einer zugeordneten Platte (10) des Plattenwärmetauschers (1) angeordnet sind.

8. Plattenwärmetauscher nach Anspruch 7, **dadurch gekennzeichnet, dass** sich bei einem in der Nut (11) der besagten Platte(10) angeordneten Lichtwellenleiter (30) die besagten Abschnitte jeweils zwischen einem ersten äußeren Randbereich (201) der Platte (10) und einem gegenüberliegenden zweiten äußeren Randbereich (202) der Platte (10) erstrecken.

9. Plattenwärmetauscher nach einem der vorhergehenden Ansprüche, **dadurch gekennzeichnet, dass** es sich bei der besagten Lamelle (20) um eine äußerste Lamelle (20) des Plattenwärmetauschers (1) handelt.

10. Plattenwärmetauscher nach einem der vorhergehenden Ansprüche 7 bis 9, **dadurch gekennzeichnet, dass** es sich bei der besagten Platte (10) um eine äußerste Platte (10) des Plattenwärmetauschers (1) in Form einer Deckplatte (10) handelt.

11. Plattenwärmetauscher nach einem der vorhergehenden Ansprüche, **dadurch gekennzeichnet, dass** die Kanäle (K) der besagten Lamelle (20) dazu eingerichtet und vorgesehen sind, bei einem bestimmungsgemäßen Betrieb des Plattenwärmetauschers (1) nicht von im Plattenwärmetauscher (1) geführten Prozessmedien durchströmt zu werden, oder dass die Kanäle (K) jener Lamelle (20) dazu eingerichtet und vorgesehen sind, bei einem bestimmungsgemäßen Betrieb des Plattenwärmetauschers (1) von einem im Plattenwärmetauscher (1) geführten Prozessmedium durchströmt zu werden.

12. Verfahren zur Temperaturmessung in einem Plattenwärmetauscher unter Verwendung eines Plattenwärmetauschers nach einem der vorhergehenden Ansprüche, aufweisend die Schritte:
- Einkoppeln von Licht in einen Lichtwellenleiter (30), der in einer Nut (11) einer Lamelle (20) des Plattenwärmetauschers angeordnet ist, so dass Licht im Lichtwellenleiter (30) zurückgestreut wird, und
- Messen der Temperatur des Lichtwellenleiters (30) mit Hilfe des zurückgestreuten Lichtes.

## Claims

1. Plate heat exchanger, having:
- a multiplicity of plates (10) which run parallel to one another, with the result that a multiplicity of parallel ducts (K) are formed, and
- an optical waveguide (30) for measuring the temperature of the plate heat exchanger (1),
**characterized**
**in that** in each case a fin (20) is arranged between two adjacent plates (10) and in that the optical waveguide (30) is arranged in a groove (11) in a fin (20).

2. Plate heat exchanger according to one of the preceding claims, **characterized in that** the optical waveguide (30) is of elongate form, wherein the optical waveguide (30) is formed, in particular, by at least one glass fibre.

3. Plate heat exchanger according to Claim 1 or 2, **characterized in that** the optical waveguide (30) is arranged in a jacket (300) which encloses the optical waveguide (30), wherein in particular said jacket (300) is of tubular design, wherein, in particular, the jacket (300) is formed from a metal, in particular from a steel or aluminium.

4. Plate heat exchanger according to one of the preceding claims, **characterized in that** the optical waveguide (30) has a meandering profile.

5. Plate heat exchanger according to one of the preceding claims, **characterized in that** the optical waveguide (30) has a multiplicity of sections (30a) which, in particular, run parallel to one another, wherein, in particular, every two adjacent sections (30a) are connected in one piece to one another via, in each case, a curved section (30b) of the optical waveguide (30), wherein, in particular, the respective, curved section (30b) has a radius (R) of curvature in the range from 1 cm to 5 cm, in particular 3 cm.

6. Plate heat exchanger according to Claim 5, **characterized in that** in the case of the optical waveguide (30) which is arranged in the groove (11) of said fin (20), said sections (30a) each extend from a first outer edge region (201) of the fin (20) to a second outer edge region (202), lying opposite, of said fin (20).

7. Plate heat exchanger according to one of the preceding claims, **characterized in that** the plate heat exchanger (1) has a multiplicity of optical waveguides (30), in particular in the form of glass fibres, which are each arranged in a groove (11) in an assigned fin (20) or a groove (11) in an assigned plate (10) of the plate heat exchanger (1) .

8. Plate heat exchanger according to Claim 7, **characterized in that** in the case of an optical waveguide (30) which is arranged in the groove (11) in said plate (10), said sections each extend between a first outer edge region (201) of the plate (10) and a second outer edge region (202), lying opposite, of the plate (10).

9. Plate heat exchanger according to one of the preceding claims, **characterized in that** said fin (20) is an outermost fin (20) of the plate heat exchanger (1).

10. Plate heat exchanger according to one of the preceding Claims 7 to 9, **characterized in that** said plate (10) is an outermost plate (10) of the plate heat exchanger (1) in the form of a covering plate (10).

11. Plate heat exchanger according to one of the preceding claims, **characterized in that** the ducts (K) of said fin (20) are configured and provided such that during correct operation of the plate heat exchanger (1) process media which are conducted in the plate heat exchanger (1) do not flow through said ducts (K), or **in that** the ducts (K) of that fin (20) are configured and provided such that during correct operation of the plate heat exchanger (1) a process medium which is conducted in the plate heat exchanger (1) does flow through said ducts (K).

12. Method for measuring the temperature in a plate heat exchanger using a plate heat exchanger according to one of the preceding claims, having the steps:
- inputting light into an optical waveguide (30) which is arranged in a groove (11) in a fin (20) of the plate heat exchanger, with the result that light in the optical waveguide (30) is scattered back, and
- measuring the temperature of the optical waveguide (30) using the backscattered light.

## Revendications

1. Échangeur de chaleur à plaques, comprenant :
- une pluralité de plaques (10) qui s'étendent parallèlement les unes aux autres, de sorte qu'une pluralité de canaux (K) parallèles sont formés, et
- un guide d'ondes optiques (30) destiné à mesurer la température de l'échangeur de chaleur à plaques (1),
**caractérisé en ce**
**qu'**une lamelle (20) est respectivement disposée entre deux plaques (10) voisines et **en ce que** le guide d'ondes optiques (30) est disposé dans une rainure (11) d'une lamelle (20).

2. Échangeur de chaleur à plaques selon l'une des revendications précédentes, **caractérisé en ce que** le guide d'ondes optiques (30) est de configuration allongée, le guide d'ondes optiques (30) étant notamment formé par au moins une fibre de verre.

3. Échangeur de chaleur à plaques selon la revendication 1 ou 2, **caractérisé en ce que** le guide d'ondes optiques (30) est disposé dans une gaine (300) qui entoure le guide d'ondes optiques (30), chaque gaine (300) étant de configuration tubulaire, la gaine (300) étant notamment constituée d'un métal, notamment d'un acier ou d'aluminium.

4. Échangeur de chaleur à plaques selon l'une des revendications précédentes, **caractérisé en ce que** le guide d'ondes optiques (30) présente un tracé en forme de méandre.

5. Échangeur de chaleur à plaques selon l'une des revendications précédentes, **caractérisé en ce que** le guide d'ondes optiques (30) possède une pluralité de portions (30a) qui s'étendent notamment en parallèle les unes des autres, deux portions (30a) voisines respectives étant notamment reliées d'un seul tenant l'une à l'autre par une portion (30b) respectivement curviligne du guide d'ondes optiques (30), la portion (30b) respectivement curviligne possédant un rayon de courbure (R) dans la plage de 1 cm à 5 cm, notamment de 3 cm.

6. Échangeur de chaleur à plaques selon la revendication 5, **caractérisé en ce que** lesdites portions (30a) du guide d'ondes optiques (30) disposé dans la rainure (11) de ladite lamelle (20) s'étendent respectivement d'une première zone de bordure extérieure (201) de la lamelle (20) vers une deuxième zone de bordure extérieure (202) opposée de ladite lamelle (20).

7. Échangeur de chaleur à plaques selon l'une des revendications précédentes, **caractérisé en ce que** l'échangeur de chaleur à plaques (1) possède une pluralité de guides d'ondes optiques (30), notamment sous la forme de fibres de verre, qui sont respectivement disposés dans une rainure (11) d'une lamelle (20) associée ou une rainure (11) d'une plaque (10) associée de l'échangeur de chaleur à plaques (1).

8. Échangeur de chaleur à plaques selon la revendication 7, **caractérisé en ce que** lesdites portions du guide d'ondes optiques (30) disposées dans une rainure (11) de ladite plaque (10) s'étendent respectivement entre une première zone de bordure extérieure (201) de la plaque (10) vers une deuxième zone de bordure extérieure (202) opposée de la plaque (10).

9. Échangeur de chaleur à plaques selon l'une des revendications précédentes, **caractérisé en ce que** ladite lamelle (20) est une lamelle (20) la plus à l'extérieur de l'échangeur de chaleur à plaques (1).

10. Échangeur de chaleur à plaques selon l'une des revendications 7 à 9, **caractérisé en ce que** ladite plaque (10) est une plaque (10) la plus à l'extérieur de l'échangeur de chaleur à plaques (1) sous la forme d'une plaque de recouvrement (10).

11. Échangeur de chaleur à plaques selon l'une des revendications précédentes, **caractérisé en ce que** les canaux (K) de ladite lamelle (20) sont conçus et prévus pour, lors d'un fonctionnement de l'échangeur de chaleur à plaques (1) conformément à sa destination, ne pas être traversés par un courant du fluide de processus passant dans l'échangeur de chaleur à plaques (1), ou **en ce que** les canaux (K) de chaque lamelle (20) sont conçus et prévus pour, lors d'un fonctionnement de l'échangeur de chaleur à plaques (1) conformément à sa destination, être traversés par un courant du fluide de processus passant dans l'échangeur de chaleur à plaques (1).

12. Procédé de mesure de température dans un échangeur de chaleur à plaques en utilisant un échangeur de chaleur à plaques selon l'une des revendications précédentes, comprenant les étapes suivantes :
- injection de lumière dans un guide d'ondes optiques (30) qui est disposé dans une rainure (11) d'une lamelle (20) de l'échangeur de chaleur à plaques, de sorte que la lumière est rétrodiffusée dans le guide d'ondes optiques (30), et
- mesure de la température du guide d'ondes optiques (30) à l'aide de la lumière rétrodiffusée.
